# EUROPEAN PATENT APPLICATION

(11) **EP 4 521 270 A1**
(43) Date of publication of application: **12.03.2025**
(21) Application number: 23196446.1
(22) Date of filing: 11.09.2023
(51) Int. Cl.: G06F 16/958, G06F 8/38

(54) **A METHOD FOR THE GENERATION OF A META-MODEL DRIVEN DYNAMIC USER INTERFACE**

(71) Applicant: Siemens Industry Software Inc., Plano, TX 75024 (US)
(72) Inventor: Aghazarian, Nick, San Jose, 95148 (US); Bulyha, Vitali, Charlotte, 28277 (US); Iannone, Stephanie, Charlotte, NC 28206 (US); Kaplan, Metin, Huntington Beach, 92646 (US); Martin, Kevin, Dobson, NC 27017 (US); Nagamalli, Ramesh, San Jose, 95121 (US); Phelps, Jeremy, Charlotte, 28205 (US); Rohde, Wolfgang, Marvin, 28173 (US)
(74) Representative: Siemens Patent Attorneys

(57) **Abstract**

It is the objective of the present invention to define a method that provides a simple and effective way to create and/or customize a user interface at client side, particularly enabling the option of doing this on the fly while the production is running would be highly desirable.

This objective is achieved according to the present invention by a method for generating a user interface (MMOM UI) in at least one MOM system, said at least one MOM system controlling a manufacturing environment of a variety of manufacturing resources present in a number of business domains, comprising the steps of:
a) providing for each business domain a business domain model, said business domain model comprising beside other information all relevant information to the resources and objects in the specific business domain and their attributes that are potentially a subject for a UI tag (UI Tags);
b) generating from all business domain models a set of metadata (MOM Metadata); said set of metadata comprising the relevant information to the resources and objects and their related attributes;
c) enhancing the set of metadata to comprise additional UI-related information on how these business domain models shall be presented;
d) utilizing this set of metadata about the business domain models including the enrichment with the UI related information by a dynamic rendering engine which is executed in the manufacturing environment on the client side;
e) selecting according to the available set of metadata the information that shall be displayed in the user interface (MMOM UI) via an interface provided by a web framework (SWF); said web framework (SWF) offering the set of metadata in a selectable way to a user; and
f) using the selected information by the dynamic rendering engine to generate the user interface (MOM UI) showing the selected information according to the rendering data in the set of metadata and the enhanced UI related information.

Thus, the present method eliminates the need for an intermediate design phase which requires a running application to design or develop the UI pages. With the present invention the client user can design and configure the UI along with the rest of the business domain models in one phase without having a running software development system. Both the business domain models and the corresponding UIs are developed/deployed/published together in one go.

## Description

The present invention relates to a method for generating a user interface in at least one MOM system, said at least one MOM system controlling a manufacturing environment of a variety of manufacturing resources present in a number of business domains.

In the world of process automation and process monitoring standard automation systems for controlling the widest conceivable variety of production resources, machines and plants (MOM objects) are state of the art. Such technology covers in particular a broad range of products which are offered by the Siemens Corp. under its OpCenter^{®} product family within the field of manufacturing operation management (MOM). An extensive line of products for solving the technical tasks in question, such as counting, measuring, positioning, motion control, closed-loop control and cam control, enhance the performance capabilities of appropriate process controllers. A variety of configurations enable the implementation of flexible machine concepts.

In this context a broad range of IT solutions exist to connect the actual hardware close to the technical and/or logistical process to the application layer of the client driving the installation. Manufacturing execution systems (MES) have therefore been developed to meet all of the requirements of a service-oriented architecture (SOA) to integrate seamlessly into a totally integrated automation (TIA). A plug & play architecture, in which the individual functions can be configured and easily combined with each other thereby forms the basis for this success thereby simplifying the complex structures of controlling a manufacturing plant or the like.

Thus, manufacturing companies have faced different challenges, prominently with increasing variability in several dimensions. These dimensions include product characteristics, production volume, production process, manufacturing technology, customer behavior, supplier strategy and IT driven challenges (cloud, SaaS), and even transformation processes for entire industrial domains. This trend is still accelerating, directly impacting the value chain and its related physical supply chains, as well as factory design and management.

It is a common opinion that in order to face these challenges and continue to be competitive successfully, companies need to embrace digitalization of all the processes, non-limited to production lines but turn digital all the value chain: from customer order to product delivery, with a seamless information flow. Digitalization's impact on the industrial process is so significant that it is considered not an improvement but a revolutionary step in industrial history. A specific term was introduced to identify it: Industry 4.0. The vision of Industry 4.0 is to turn traditional plants into intelligent factories where the process is managed by software applications that link seamless business, production, logistics, and R&D in a holistic system. Siemens^{®} is following this trend by envisioning the Autonomous Factory concept, focused on highly flexible, resilient, sustainable and self-organizing production of the future.

At the base of this revolution, there is, of course, data. Data must be processed, exchanged, imported, displayed, and aggregated to make manufacturing run successfully.

The big problem of data management in a complex scenario is that they all have to be processed in the same way by the players, but they are for example usually coded in different formats. Differentiation of data format is one of the significant problems that prevent seamless application integration and raise the cost of deployment of complex systems.

Also, for software vendors, it is difficult to harmonize the data model of their applications, sometimes between different versions of the same software, which is a significant problem that brakes innovation and raises development and maintenance costs.

Semantic technologies could offer a solution to mitigate the problem and reduce costs. Semantic technology associates semantic meaning to the data structure in a way that both humans and machines can understand. For humans, be they users, developers, system integrators, or data analysts, this feature facilitates the understanding of information and improves productivity, for the machine allows to the process of data with the same semantic meaning but in a different format homogeneously.

Having said this, there remains nonetheless the burden also to provide and receive data in an advantageous and self-explaining way at the system's user interfaces. The creation, the configuration, or the updating the UI is often manual work but must be done frequently. For example, customers usually wish to configure the UI to their specific work environment to ensure high productivity. This customization effort usually lies with the IT teams and the software developers providing the system for the customer. Even minor changes may create a significant overhead in time and costs because of communication demands between the users and the developers and special skills to develop UIs. This overhead slows down customers' reactions to emerging needs and may lead to a dissatisfaction with customers. Additionally, each new release has the potential to release new UI changes that every customer must integrate into their environment.

Thus, development teams currently have separate UI teams to create UI to represent/manipulate the data. Customers have employed either internal developers or hired external contractors to configure UI based on their changes to the model, and changes from new releases which is cost-and personal-extensive.

Thus, it is the objective of the present invention to define a method that provides a simple and effective way to create and/or customize a user interface at client side, particularly enabling the option of doing this on the fly while the production is running would be highly desirable.

This objective is achieved according to the present invention by a method for generating a user interface in at least one MOM system, said at least one MOM system controlling a manufacturing environment of a variety of manufacturing resources present in a number of business domains, comprising the steps of:
a) providing for each business domain a business domain model, said business domain model comprising beside other information all relevant information to the resources and objects in the specific business domain and their attributes that are potentially a subject for a UI tag;
b) generating from all business domain models a set of metadata; said set of metadata comprising the relevant information to the resources and objects and their related attributes;
c) enhancing the set of metadata to comprise additional UI-related information on how these business domain models shall be presented;
d) utilizing this set of metadata about the business domain models including the enrichment with the UI related information by a dynamic rendering engine which is executed in the manufacturing environment on the client side (browser);
e) selecting according to the available set of metadata the information that shall be displayed in the user interface via an interface provided by a web framework; said web framework offering the set of metadata in a selectable way to a user; and
f) using the selected information by the dynamic rendering engine to generate the user interface showing the selected information according to the rendering data in the set of metadata and the enhanced UI related information.

Thus, the present method eliminates the need for an intermediate design phase which requires a running application to design or develop the UI pages. With the present invention the client user can design and configure the UI along with the rest of the business domain models in one phase without having a running software development system. Both the business domain models and the corresponding UIs are developed/deployed/published together in one go.

In a preferred embodiment of the present invention, the UI-related information may comprise information to one or more of the following items:
i) grouping of attributes,
ii) the layouts of attributes and/or the respective UI tags,
iii) the position of attributes and/or UI tags,
iv) size of attributes and/or UI tags,
v) element options related to the attributes and/or the UI tags.

Together with the metadata, this UI-related information is already present once the user starts to design his/her user interface.

In order to enable a simple access to the UI creation environment, it may be helpful when the dynamic rendering engine which is executed in the manufacturing environment on the client side is provided in terms of a browser.

To support the automatic generation of the user interfaces, the underlying web framework may be constructed in a library format allowing the user to browse through the content in terms of the selectable information.

Further support in the generation of the user interfaces can be provided in terms of a support when selecting the desired items to be displayed in the user interface. Thus, the web framework can be designed to enable the user to select the desired items out of the selectable information by a drag & drop operation.

Preferred embodiments are hereinafter described in more detail with reference to the attached drawings which depict in:
- Figure 1: schematically a conceptual view on a Modular MOM Dynamic UI Framework in the Runtime environment;
- Figure 2: schematically a first conceptual example for a UI created by the dynamic rendering engine shown in Figure 1;
- Figure 3: schematically a second conceptual example for a UI created by the dynamic rendering engine shown in Figure 1;
- Figure 4: schematically a third conceptual example for a UI created by the dynamic rendering engine shown in Figure 1;
- Figure 5: schematically a fourth conceptual example for a UI created by the dynamic rendering engine shown in Figure 1;
- Figure 6: schematically and demonstratively the metadata configurations that were used to generate the first conceptional example for the user interface shown in Figure 2;
- Figure 7: schematically and demonstratively the metadata configurations that were used to generate the second conceptional example for the user interface shown in Figure 3;
- Figure 8: schematically and demonstratively the metadata configurations that were used to generate the third conceptional example for the user interface shown in Figure 4; and
- Figure 9: schematically and demonstratively the metadata configurations that were used to generate the fourth conceptional example for the user interface shown in Figure 5.

The present invention is part of an MES/MOM solution, such as distributed under the trade name of Opcenter^{®} by the Siemens^{®} AG and aims at providing a better value for multi-plant solutions by increasing the capabilities to automatically generate user interface without any need of local programming. Thus, data operability over different applications and systems/tool/resources in a manufacturing entity can be significantly improved.

In particular, the present invention provides a concept of the dynamic generation of a user interface. This dynamic generation of the UI is built upon the concept of a model-driven approach where a core business solution is built around the business domain models. Said business domain models comprise beside other information all relevant information to the resources and objects in the specific business domain and their attributes that can be made a subject for a potential UI tag. The set of all business domain models is hereinafter called Metadata. This Metadata is according to the present invention enhanced to comprise additional UI-related information on how these business domain models shall be presented, such as the grouping of attributes, the layouts, position, size, element options etc.

This Metadata about the business domain models including the enrichment with the UI related information is utilized by a dynamic rendering engine which is executed on the client side (browser). This dynamic rendering engine generates the corresponding elements/artifacts in the user interface according to a predefined web framework on demand. The results of the dynamic rendering engine are then presented to the user.

In this context, the web framework is a configuration-first framework that enables the user to rapidly develop web applications with significantly less code to write, test, maintain and download at run time. It usually follows top trends in the front-end development like component-oriented design, declarative coding, consolidation of state management, SPA and client-side routing, and it allows extensions using JavaScript code to manage application complexity. Thus, the web framework present here provides a complete framework to realize an end-to-end solution for frontend applications according to the demand of the user. The declarative UI approach provides the possibility to develop the user interfaces in a technology-independent way, without being tied to any JavaScript framework. In the present solution here, a rich set of ready-made UI Elements are provided that can be used to build web applications that are consistent with today's common user experiences.

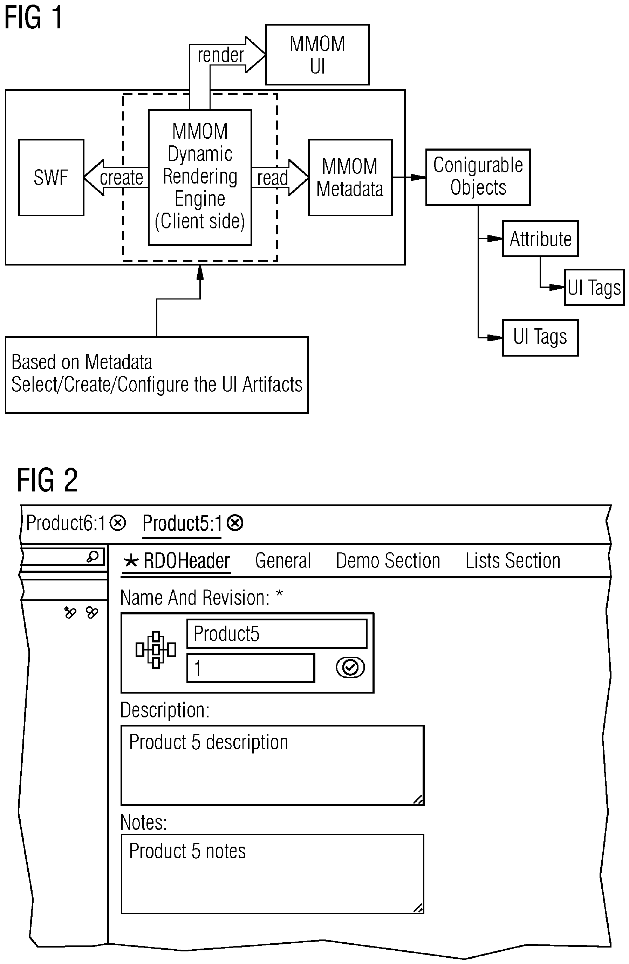

This high-level flow/design of this method is shown in Figure 1.

Hereinafter, some examples are presented to explain the way how the Metadata is leveraged for the generation dynamic UI artifacts in the so-generated user interfaces.

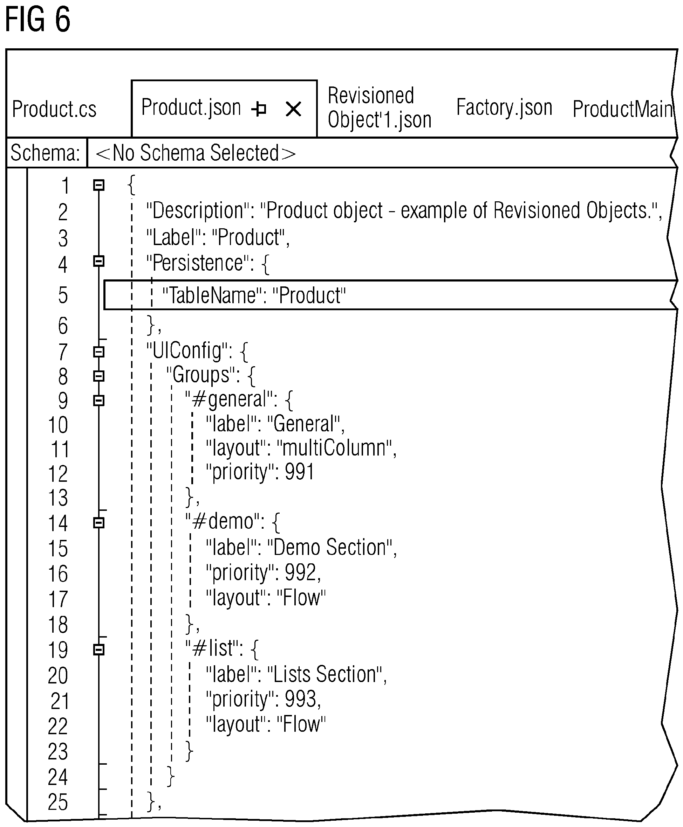

The example in Figure 2 and the respective coding in Figure 6 illustrate the type of an object & the field user interface, along with some of properties of the object shown in the user interface. This information is used to determine the UI controls used. Also, the additional Metadata properties shall be used to generate the UI elements accordingly. In this example:
i) UI fragments represent a revisable object that drives the usage of a specific UI element that represents this type of object
ii) The tabs listed are driven by the UI related Metadata associated with this metadata object definition
iii) The Description field contains a string type value with multiline config option set, and hence a multiline TEXT control is used
iv) The Notes field also contains a string type value, but its field is marked as read-only or is write-protected; hence the TEXT control on the UI is also write-protected.

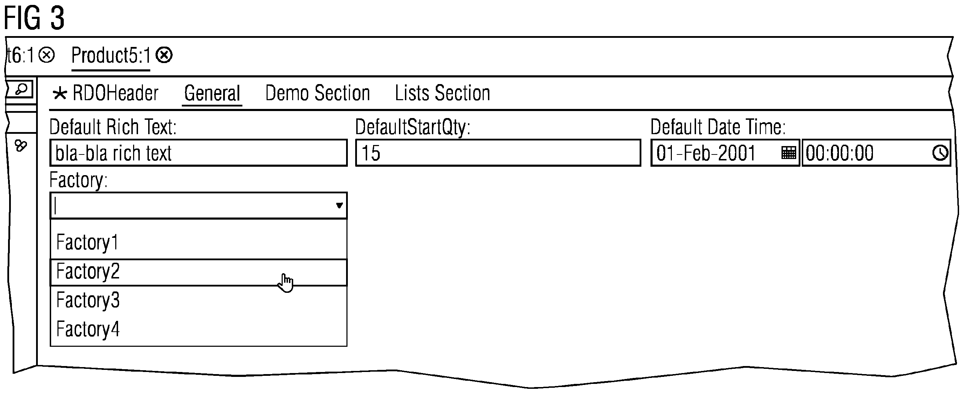

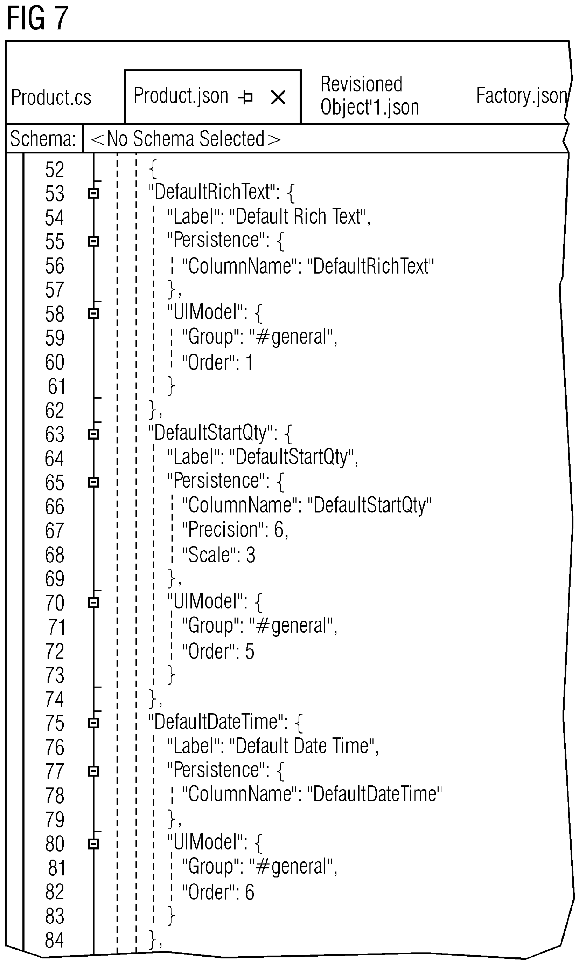

The example in Figure 3 and the respective coding in Figure 7 depict the generation of "automatic picklist control" based on the field's Metadata configuration. The field Factory represents an object with a name, and the field is configured to provide the list of values to the picklist. This example also demonstrates multicolumn layout strategy based on the General group's configuration.

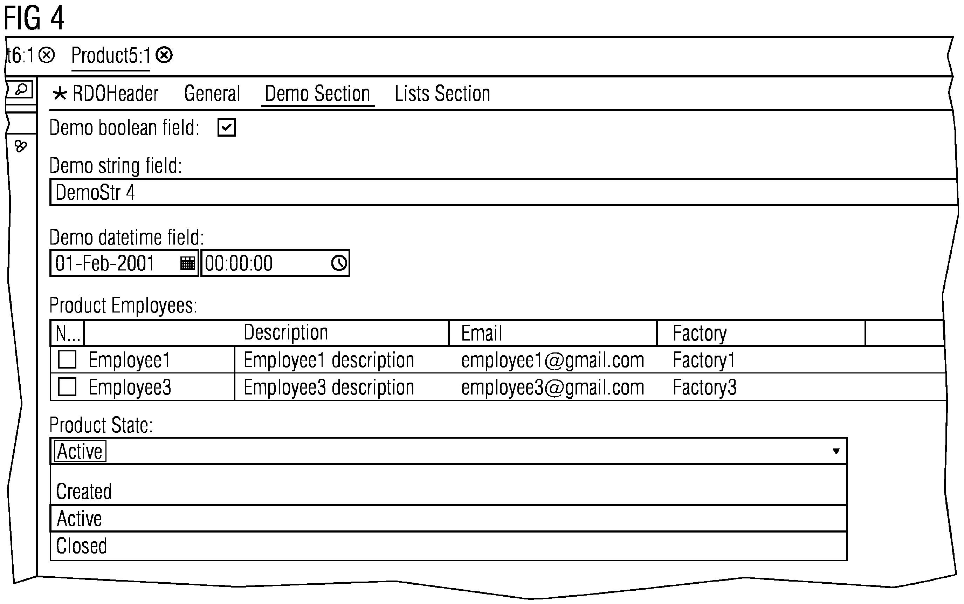

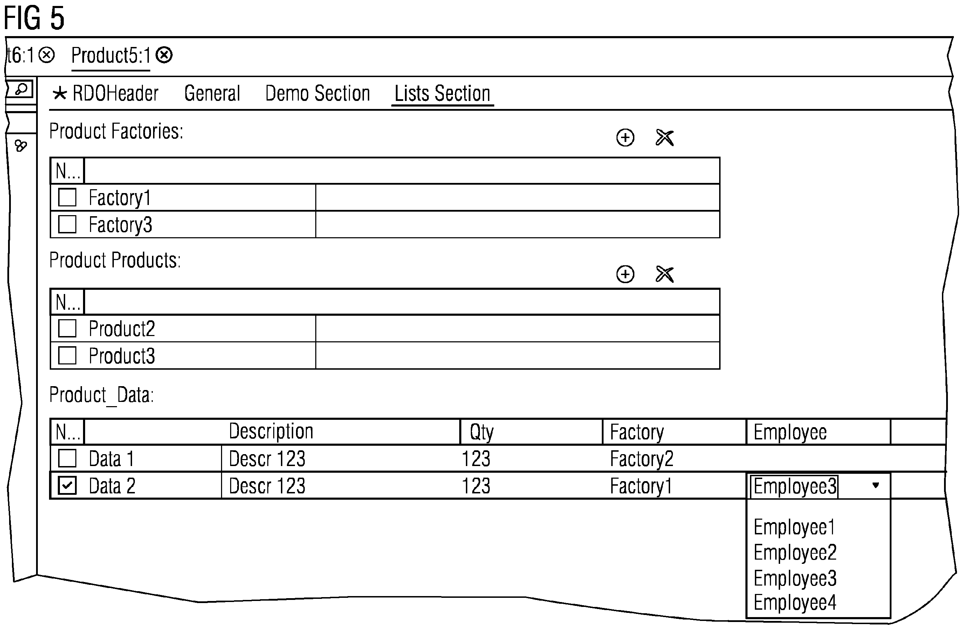

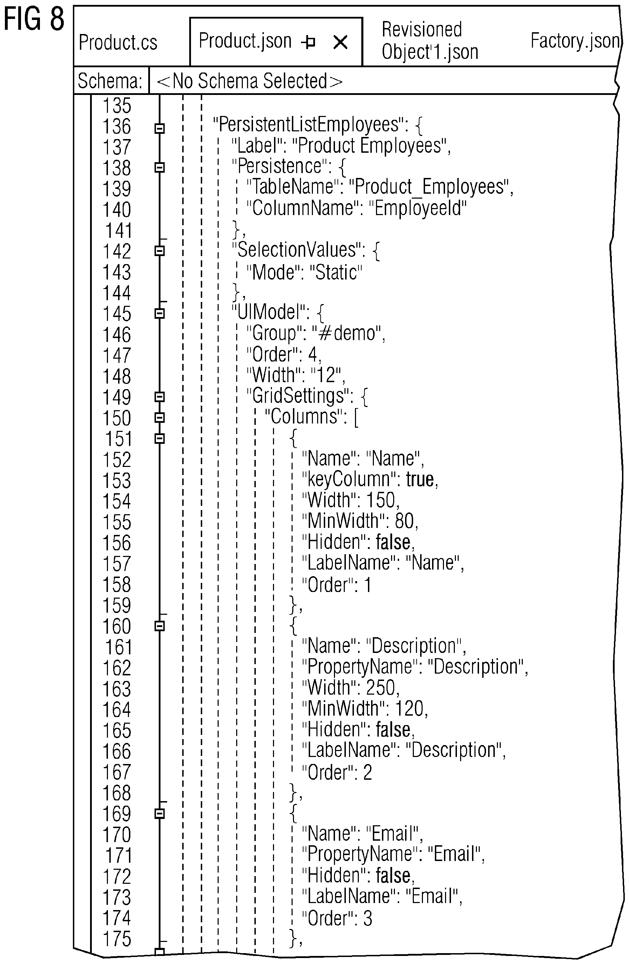

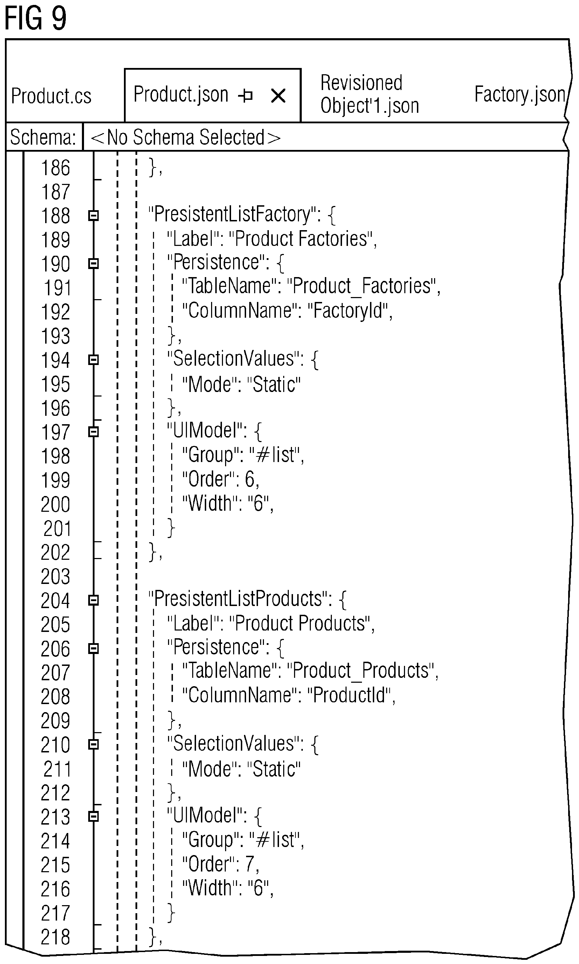

More complex UI elements like lists and grids (Figure 4 and the respective coding in Figure 8 and Figure 5 and the respective coding in Figure 9) are also dynamically generated based on the Metadata. Lists shall represent a list of simple values or a list of objects with a simple association relationship. Grids are helpful when depicting a list of objects with a composition type of relationship. The following images illustrate a few examples of the UI elements to represent Lists & Grids, which are essential for the generation of the corresponding UI elements solely on the objects & fields metadata configuration.

All of these user interfaces in the Figures 2 to 5 are dynamically rendered at runtime without requiring UI page design and based solely on the metadata configuration. Figures 6 to 9 are demonstrative of the metadata configurations that were used to generate the above user interfaces accordingly.

Thus, closing the gap between how a development team creates a UI and customer configures will increase efficiency. Customers will extend the model with UI-related information, thus getting the UI they want without big service projects. This gives customers the ability to extend the model in an agile and cost-efficient way.

The performance of the UI getting rendered on the browser in the runtime environment of the client is the same as the hardcoded UIs provided today. The present invention provides a design-time UI creation methodology which differs here significantly from the hardcoding UI provision. This approach has a design time where the user pre-configures the pages or components by dragging and dropping model elements into a concept called 'Virtual Page' which are for example provided by a web framework. The UI application reads the contents of this virtual page and renders the final UI to the user.

In the practical realization, the prior art follows a 2-phased approach for the UI creation and its deployment:
i) Create, Configure & Deploy models -> Run the Application Services for the customized models; and
ii) Create, Configure & Deploy UI pages -> Now the UI pages are available for end-user consumption

The present invention eliminates the need for an intermediate design phase which requires a running application to design or develop the UI pages. With the present invention the client user can design and configure the UI along with the rest of the models in one phase without having a running system. Both the models and the corresponding UIs are developed/deployed/published together in one go.

## Claims

1. A method for generating a user interface (MMOM UI) in at least one MOM system, said at least one MOM system controlling a manufacturing environment of a variety of manufacturing resources present in a number of business domains, comprising the steps of:
a) providing for each business domain a business domain model, said business domain model comprising beside other information all relevant information to the resources and objects in the specific business domain and their attributes that are potentially a subject for a UI tag (UI Tags);
b) generating from all business domain models a set of metadata (MOM Metadata); said set of metadata comprising the relevant information to the resources and objects and their related attributes;
c) enhancing the set of metadata to comprise additional UI-related information on how these business domain models shall be presented;
d) utilizing this set of metadata about the business domain models including the enrichment with the UI related information by a dynamic rendering engine which is executed in the manufacturing environment on the client side;
e) selecting according to the available set of metadata the information that shall be displayed in the user interface (MMOM UI) via an interface provided by a web framework (SWF); said web framework (SWF) offering the set of metadata in a selectable way to a user; and
f) using the selected information by the dynamic rendering engine to generate the user interface (MOM UI) showing the selected information according to the rendering data in the set of metadata and the enhanced UI related information.

2. The method according to claim 1 wherein the UI-related information comprises information to one or more of the following items:
i) grouping of attributes,
ii) the layouts of attributes and/or the respective UI tags,
iii) the position of attributes and/or UI tags,
iv) size of attributes and/or UI tags,
v) element options related to the attributes and/or the UI tags.

3. The method according to claim 1 or 2 wherein the dynamic rendering engine which is executed in the manufacturing environment on the client side is provided in terms of a browser.

4. The method according to any of the preceding claims, wherein web framework (SWF) is constructed in a library format allowing the user to browse through the content in terms of the selectable information.

5. The method according to any of the preceding claims, wherein the web framework (SWF) is designed to enable the user to select the desired items out of the selectable information by a drag & drop operation.
